# FASCICULE DE BREVET EUROPEEN

(11) **EP 2 993 827 B1**
(45) Date de publication et mention de la délivrance du brevet: **02.09.2020**
(21) Numéro de dépôt: 15174823.3
(22) Date de dépôt: 01.07.2015
(51) Int. Cl.: H04L 12/26, H04L 29/08

(54) **SYSTÈME ET MÉTHODE DE SURVEILLANCE DE SERVEURS INFORMATIQUES**
SYSTEM UND VERFAHREN ZUR ÜBERWACHUNG VON IT-SERVERN
SYSTEM AND METHOD FOR MONITORING COMPUTER SERVERS

(30) Priorité: 04.09.2014 FR 1458307
(43) Date de publication de la demande: 09.03.2016
(73) Titulaire: Bull S.A.S., 78340 Les Clayes-sous-Bois (FR)
(72) Inventeur: MENIGOT, Gilles, 38190 Froges (FR); Demeilliez, Bruno, 38330 Montbonnot Saint Martin (FR); ALVAREZ-MARCOS, José-Ignacio, 69220 Saint Jean d'Ardieres (FR)
(74) Mandataire: Novagraaf Technologies

(56) Documents cités:
- WO-A2-02/23434
- US-A1- 2014 136 680
- US-A1- 2014 215 058

## Description

L'invention a trait au domaine de la surveillance d'infrastructures informatiques, plus particulièrement, la surveillance des communications entre un ensemble de serveurs dans un système informatique et de la consommation des ressources dans ce système.

Un système informatique, tel qu'un système d'information ou un supercalculateur, comprend typiquement un réseau de serveurs interconnectés. Un composant applicatif, par exemples une application web ou un composant logiciel, peut être implémenté sur un ou plusieurs serveurs de ce système informatique. Les serveurs d'un système informatique sont, donc, amenés à communiquer entre eux lorsqu'une application est hébergée d'une manière partagée entre ces serveurs. Ces serveurs sont, en outre, amenés à communiquer avec d'autres serveurs de ce système informatique.

Les communications inter-serveurs impliquent à titre d'exemples, des échanges de fichiers, de données, ou encore l'établissement de connexions spécifiques telles des connexions SSH, acronyme anglais de « *Secure Shell* ». Ces communications influent couramment sur les performances des serveurs, et peuvent dans certains cas fortement perturber leurs performances (ex. : problèmes de latences, de bande-passantes). Les exploitants d'un système informatique, notamment en entreprise, ne disposent pas toujours d'une cartographie actualisée, permettant de lister de manière exhaustive les différents échanges d'information ou flux de données conduits entre les différents serveurs. A ce jour, il n'existe pas de solution permettant de répertorier et cartographier l'ensemble des échanges existants entre chaque serveur d'un système informatique. Des solutions d'identification de flux de données existent pour des configurations mono-serveur, par exemple pour un serveur de type pare-feu (« *firewall* » en anglais), mais aucune de ces solutions n'est actuellement applicable à un ensemble de serveurs.

US 2014/215058 A1 divulgue des méthodes et systèmes d'estimation et d'analyse de l'activité des flux et des données de performance des trajets dans des systèmes distribués ou en nuage.

La présente invention a pour objet de remédier aux inconvénients précités.

Un premier objectif est de proposer un mécanisme permettant de répertorier les flux existants entre chaque serveur.

Un deuxième objectif est de proposer un mécanisme permettant de dresser automatiquement une cartographie actualisée et exhaustive des échanges entre les différents serveurs d'un système informatique.

Un troisième objectif est de proposer un mécanisme permettant la détection et l'identification de flux de données non-cartographiés initialement.

Un quatrième objectif est de proposer un mécanisme permettant de comprendre les évolutions de consommation de ressources des serveurs dans un système informatique.

A cet effet, il est proposé selon un premier aspect, un système de gestion d'une pluralité de serveurs informatiques interconnectés via un réseau de communication selon la revendication 1.

Avantageusement, une première sonde, dite sonde réseau, configurée pour superviser les échanges de données et une deuxième sonde, dite sonde de ressources, configurée pour mesurer les ressources sont associées à un même serveur informatique. La sonde réseau est configurée pour détecter, déterminer et analyser les paramètres associés aux flux de données entrant et sortant vers/depuis le serveur informatique. Les paramètres associés aux flux de données comprennent l'adresse du serveur informatique source ou destinataire du flux de données, le type du flux de données, et le numéro de port de destination.

La sonde de ressources est configurée pour mesurer les paramètres matériels du serveur informatique, ces paramètres matériels comprenant la volumétrie, le temps de traitement de données réceptionnées, le temps de traitement d'une requête, le taux d'occupation des caches de processeurs, les entrées/sorties de disques réseaux, l'utilisation de la mémoire vive, et la bande passante.

Il est proposé selon un deuxième aspect, une méthode de gestion d'une pluralité de serveurs informatiques interconnectés via un réseau de communication selon la revendication 6.

Cette méthode de gestion comprend, en outre, une étape de corrélation de ces mesures collectées.

Il est proposé selon un troisième aspect, un supercalculateur comprenant le système, cité ci-dessus, de gestion d'une pluralité de serveurs informatiques.

D'autres objets et avantages de l'invention apparaîtront à la lumière de la description d'un mode de réalisation, faite ci-après en référence aux dessins annexés dans lesquels :
- la figure 1 illustre un réseau de communication dans un système informatique comprenant une pluralité de serveurs selon un mode de réalisation ;
- la figure 2 illustre la réalisation d'une méthode permettant d'obtenir une cartographie de l'ensemble des flux de données entre ces serveurs selon un mode de réalisation.

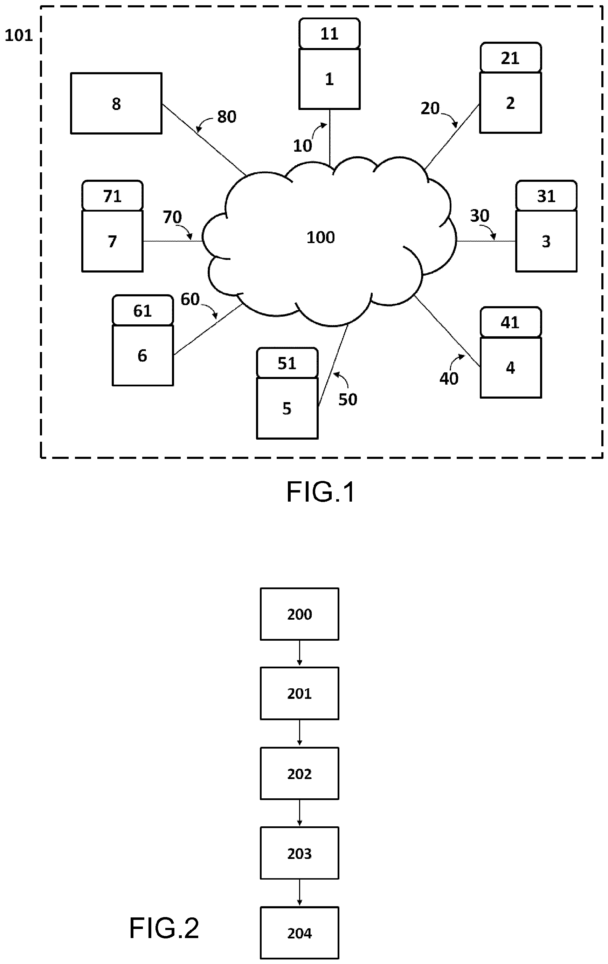

Sur la figure 1 est représenté un réseau 100 de communication dans un système informatique 101. Le système informatique 101 est, à titre d'exemples, un système d'information ou un supercalculateur. Le réseau 100 de communication peut, à titre d'exemples, être un réseau privé, un réseau public, un réseau local, un réseau de stockage ou encore un réseau étendu. Avantageusement, le réseau 100 de communication permet l'interconnexion physique et logique d'une pluralité de serveurs 1, 2, 3, 4, 5, 6, 7 informatiques selon une configuration préétablie. Une telle configuration est, par exemple, déterminée au préalable par un architecte réseau, puis déployée dans le réseau 100 de communication, via l'utilisation de liaisons physiques 10, 20, 30, 40, 50, 60, 70 permettant l'interconnexion des serveurs 1, 2, 3, 4, 5, 6, 7 informatiques. Les serveurs 1, 2, 3, 4, 5, 6, 7 informatiques mis en réseau de communication sont à titre d'exemples, des serveurs web, des serveurs de données, des serveurs d'affichage, et/ou des serveurs d'applications. Avantageusement, les liaisons physiques 10, 20, 30, 40, 50, 60, 70 permettent le transport de flux de données, se rapportant à titre d'exemples à des communications ou des échanges entre les différents serveurs 1, 2, 3, 4, 5, 6, 7 informatiques, ces communications pouvant être unidirectionnelles ou bidirectionnelles.

Selon divers modes de réalisation, un ou plusieurs serveurs 1, 2, 3, 4, 5, 6, 7 informatiques du système informatique 101 forment une ou plusieurs chaines applicatives, c'est-à-dire se rapportent à des serveurs applicatifs proposant de manière indépendante ou conjointe une ou plusieurs applications.

Le système informatique 101 comprend, par ailleurs, une pluralité de sondes 11, 21, 31, 41, 51, 61, 71 aptes à superviser les échanges de données via le réseau 100 de communication et les ressources des serveurs 1, 2, 3, 4, 5, 6, 7 informatiques. A titre d'exemple, sur la figure 1, chacune des sondes 11, 21, 31, 41, 51, 61, 71 est respectivement associée à un serveur 1, 2, 3, 4, 5, 6, 7 informatique et supervise l'état de celui-ci. Selon un autre mode de réalisation, chaque serveur 1, 2, 3, 4, 5, 6, 7 informatique est supervisé par une pluralité de sondes 11, 21, 31, 41, 51, 61, 71, chaque sonde 11, 21, 31, 41, 51, 61, 71 pouvant être de différent type. A titre d'exemple
- une première sonde installée sur un serveur 1, 2, 3, 4, 5, 6, 7 informatique est une sonde réseau, permettant de détecter, déterminer et analyser les paramètres associés aux flux de données entrants et sortant vers/depuis le serveur 1, 2, 3, 4, 5, 6, 7 informatique. Un tel type de sonde analyse et identifie, par exemple, dans l'en-tête de chaque paquet de données du flux de données, l'adresse de l'équipement informatique source ou destinataire du paquet ou plus généralement du flux de données (ex : serveur 1, 2, 3, 4, 5, 6, 7 informatique, terminal informatique distant), le type de paquet ou plus généralement du flux de données (ex : TCP, IP, UDP), le numéro de port de destination (donne une indication sur le type de service utilisé) ;
- une deuxième installée sur un serveur 1, 2, 3, 4, 5, 6, 7 informatique est une sonde de ressources, apte à mesurer les paramètres matériels du serveur 1, 2, 3, 4, 5, 6, 7 informatique. A titre d' exemples, un tel type de sonde mesure dans le serveur 1, 2, 3, 4, 5, 6, 7 informatique : la volumétrie, le temps de traitement de données réceptionnées, le temps de traitement d'une requête, le taux d'occupation des caches de processeurs CPU (acronyme anglais de « *Central Processing Unit* »), les entrées/sorties I/O (acronyme anglais de « *Input*/*Output* ») de disques réseaux, l'utilisation de la mémoire vive RAM (acronyme anglais de « *Random Access Memory* »), la bande passante (débit instantané).

Selon divers modes de réalisations, un serveur 1, 2, 3, 4, 5, 6, 7 informatique comporte au moins une sonde réseau et au moins une sonde de ressource, et peut si besoin comporter une pluralité de sondes du même type.

Le système informatique 101 comprend, en outre, un terminal informatique 8 connecté au réseau 100 de communication via une liaison 80. Avantageusement, le terminal informatique 8 permet de superviser l'ensemble des flux de données existants dans le réseau 100 de communication, d'en dresser une cartographie, communiquer à un utilisateur les ressources mesurées au niveau des serveurs 1, 2, 3, 4, 5, 6, 7 informatique et d'établir des corrélations entre ses ressources à des fins de diagnostics.

La figure 2, illustre les étapes d'une méthode permettant d'obtenir une cartographie de l'ensemble des flux de données existants entre les serveurs 1, 2, 3, 4, 5, 6, 7 informatiques du système informatique 101.

Lors d'une étape de configuration 200, un utilisateur fournit au terminal informatique 8 un ensemble de données. Ces données peuvent, à titre d' exemples, être saisies dans une interface graphique appropriée apte à générer un fichier de configuration à partir des données saisies, ou encore directement communiquées par l'utilisateur au terminal informatique 8 via un fichier de configuration qu'il aura lui-même préalablement rempli. Avantageusement, les informations communiquées par l'utilisateur, vont permettre au terminal informatique 8 d'établir une cartographie initiale reposant uniquement sur les connaissances de l'utilisateur. Cette cartographie sera par la suite complétée lors d'une étape d'analyse, décrite ultérieurement, dont les résultats sont fonction des données fournies par l'utilisateur et des données retournées par les sondes 11, 21, 31, 41, 51, 61, 71.

Une partie des données fournies par l'utilisateur servent, par ailleurs, au paramétrage de cette étape d'analyse, permettant par exemple de spécifier des paramètres à superviser par les sondes 11, 21, 31, 41, 51, 61, 71. Ainsi, dans un mode de réalisation, les données fournies par l'utilisateur au terminal informatique 8 comprennent au moins :
- des informations relatives à l'ensemble des flux de données connus par l'utilisateur. Ces flux de données se rapportent, à titre d'exemple, à une chaîne applicative réalisée par un ensemble de serveurs applicatif, des échanges de données pré-identifiés entre un serveur applicatif et tout autre serveur 1, 2, 3, 4, 5, 6, 7 informatique du réseau 100 de communication, ou encore des échanges entre deux serveurs 1, 2, 3, 4, 5, 6, 7 informatiques quelconques de ce réseau. Les informations relatives à un flux de données spécifiques entre deux serveurs comprennent par exemple dans le cas de l'utilisation d'un protocole internet IP (acronyme anglais de « Internet Protocol »)
   ∘ l'adresse IP d'un serveur source, émetteur d'un paquet ;
   ∘ l'adresse IP d'un serveur de destination pour le paquet ;
   ∘ le port de communication utilisé par le serveur source et/ou le serveur de destination pour l'envoi et/ou la réception du paquet ;
   ∘ un nom associé au flux de donnée existant entre le serveur source et le serveur de destination ;
   ∘ un ou plusieurs créneaux horaires pour superviser via les sondes 11, 21, 31, 41, 51, 61, 71 les flux et ressources du serveur source et du serveur de destination ;
   ∘ un intervalle temporel d'échantillonnage pour les mesures effectuées par les sondes 11, 21, 31, 41, 51, 61, 71 ;
- des informations concernant un ou plusieurs graphiques d'analyse de flux de données que l'utilisateur souhaite obtenir. A titre d'exemple
   ∘ la ou les ressources (ex : débit, mémoire RAM, utilisation des processeurs CPU) à superviser pour un serveur spécifique ou un ensemble de serveurs 1, 2, 3, 4, 5, 6, 7 informatiques ;
   ∘ un ou plusieurs intervalles de temps pour superviser les flux de données au niveau d'un serveur spécifique ou un ensemble de serveurs 1, 2, 3, 4, 5, 6, 7 informatiques ;
   ∘ le type d'information à superviser concernant les flux de données pour un serveur spécifique ou un ensemble de serveurs 1, 2, 3, 4, 5, 6, 7 informatiques, par exemples le nombre total de connexions ouvertes durant un intervalle de temps prédéfini, l'évolution du nombre de connexions simultanées sur un intervalle de temps prédéfini et/ou le nombre de connexion maximal sur cet intervalle de temps ;
   ∘ un intervalle temporel d'échantillonnage pour les mesures effectuées par les sondes 11, 21, 31, 41, 51, 61, 71 ;
- la définition de seuils permettant la détection d'anomalies de consommation de ressources, par exemples
   ∘ des valeurs minimales et/ou maximales de pourcentage d'utilisation de ressources (ex : taux d'occupation des processeurs CPUs, de la mémoire RAM) permettant de définir des intervalles de bon fonctionnement et d'anomalies des serveurs 1, 2, 3, 4, 5, 6, 7 informatiques ;
   ∘ des pourcentages de variation(s) autorisée(s) de ressource(s) en fonction d'un ou plusieurs intervalles de temps prédéfinis ;
   ∘ d'un ou plusieurs seuils temporels au-delà duquel la valeur ou la variation d'une ressource est considérée comme une anomalie.

Une fois l'ensemble de ces données fournies lors de l'étape de configuration 200, une étape de lecture de configuration 201 est effectuée par le terminal informatique 8. Basé sur l'étape de lecture de configuration 201, le terminal informatique 8 initie une étape de collecte de mesures 202 via les sondes 11, 21, 31, 41, 51, 61, 71. Ainsi, une pluralité de sondes 11, 21, 31, 41, 51, 61, 71 telles des sondes de type sonde réseau ou sonde de ressource sont exécutées en parallèle et collectent durant des périodes préconfigurées, des données telles que les adresses IP des flux de données, les types de paquets utilisés ou les taux d'occupation mémoire des différents composants des serveurs 1, 2, 3, 4, 5, 6, 7 informatiques. Selon divers modes de réalisation, les données collectées par chacune des sondes 11, 21, 31, 41, 51, 61, 71 sont remontées en temps réel au terminal informatique 8 ou enregistrées dans une base de donnée associée à chaque sonde 11, 21, 31, 41, 51, 61, 71 dont le contenu est communiqué au terminal informatique 8 à la fin de l'étape de collecte de mesures 202. Par exemples,
- le terminal informatique 8 peut créer, enregistrer et compléter au fur et à mesure un fichier de logs structurant les données retournées en temps réel par les sondes 11, 21, 31, 41, 51, 61, 71 ;
- un ensemble de fichiers de logs collectés par chacune des sondes 11, 21, 31, 41, 51, 61, 71 est transmis au terminal informatique 8 à la fin de l'étape de collecte de mesures 202.

Au cours d'une étape d'analyse 203 sur l'ensemble des données collectées par les sondes 11, 21, 31, 41, 51, 61, 71, le terminal informatique 8 effectue ensuite les opérations suivantes
- la construction d'une cartographie de l'ensemble des flux mesurés par les sondes 11, 21, 31, 41, 51, 61, 71 entre les serveurs 1, 2, 3, 4, 5, 6, 7. Une cartographie des flux est par exemple réalisée par le terminal informatique 8 à partir d'une méthode connue de cartographie, utilisant pour paramètres d'entrée l'emplacement physique des sondes 11, 21, 31, 41, 51, 61, 71 (paramètre connu du terminal informatique 8), ainsi que le type de flux détecté associé à l'emplacement physique de chaque sonde 11, 21, 31, 41, 51, 61, 71. Un type de flux détecté se rapporte, par exemple, à une application spécifique à un ou un ensemble de serveurs 1, 2, 3, 4, 5, 6, 7 informatiques, et est identifié par le terminal informatique 8 en fonction du type de paquet (ex : UDP, TCP) réceptionné par chaque serveur 1, 2, 3, 4, 5, 6, 7 informatique et/ou en fonction du port de réception utilisé par le serveur 1, 2, 3, 4, 5, 6, 7 informatique ;
- la détection des flux de données non recensés par l'utilisateur lors de l'étape de configuration 200. Par exemple, cette détection est réalisée par une étape de comparaison entre les flux de données inter-serveurs, listés lors de l'étape de configuration 200, et l'ensemble des flux de données entre les serveurs 1, 2, 3, 4, 5, 6, 7 informatiques, mesurés par les sondes 11, 21, 31, 41, 51, 61, 71 lors de l'étape de collecte de mesures 202. Si une ou plusieurs différences sont observées entre les flux de données lors de l'étape de comparaison, le terminal informatique 8 peut alors notifier l'utilisateur de la présence de flux inconnus et lui communiquer le type de flux identifié, qui est par ailleurs cartographié comme exposé précédemment. Avantageusement, cette détection permet, donc, de vérifier s'il existe d'autres interactions entre serveurs non-connues initialement de l'utilisateur, et établir une cartographie actualisée et exhaustive des échanges de flux de données pour une ou plusieurs applications ;
- la détection éventuelle de serveurs 1, 2, 3, 4, 5, 6, 7 non recensés lors de l'étape de configuration 200. Ce type de détection, peut être réalisé via une étape de comparaison entre les adresses IP des serveurs 1, 2, 3, 4, 5, 6, 7 informatiques renseignées lors de l'étape de configuration 200, et un ensemble d'adresses IP détectées dans les en-têtes des paquets des flux de données détectés par les sondes 11, 21, 31, 41, 51, 61, 71 lors de l'étape de collecte de mesures 202. L'identification d'une adresse IP source ou de destination associée à un flux de données permet alors d'identifier un serveur informatique non recensé. Si un tel serveur informatique est détecté, l'utilisateur est notifié de la présence d'un serveur non-recensé et lui proposer d'étendre (ou étendre automatiquement) la cartographie existante par l'ajout de ce serveur informatique ;
- la détection d'anomalies, via une étape de comparaison entre les ressources mesurées par les sondes 11, 21, 31, 41, 51, 61, 71 et les seuils d'anomalies spécifiés en accord avec les données fournies lors de l'étape de configuration 200. Une anomalie détectée est alors associée à un ou plusieurs intervalles temporels durant lesquels celle-ci a été détectée ;
- l'identification d'un ou plusieurs flux de données mesurés entre les serveurs 1, 2, 3, 4, 5, 6, 7 informatiques durant un intervalle temporel, par comparaison avec une ou plusieurs anomalies détectées durant un intervalle temporel. L'identification des flux de données peut, par exemples, se rapporter au flux de données échangées durant l'occurrence d'une anomalie ou aux derniers flux de données échangées juste avant l'occurrence d'une anomalie. Le terminal informatique 8 est, donc, apte à établir une chronologie de l'ensemble des flux de données, ressources et anomalies pour chaque serveur 1, 2, 3, 4, 5, 6, 7 informatiques, et au besoin comparer, corréler et/ou associer ces éléments par rapport à un même référentiel temporel ;
- la recherche et l'identification de variations éventuelles de ressources mesurées par les sondes 11, 21, 31, 41, 51, 61, 71 sur les serveurs 1, 2, 3, 4, 5, 6, 7 informatiques durant l'intervalle temporel d'occurrence d'une anomalie détectée ;
- la réalisation de graphiques à partir des flux de données et ressources mesurées par les sondes 11, 21, 31, 41, 51, 61, 71 au niveau des serveurs 1, 2, 3, 4, 5, 6, 7 informatiques.

Ainsi, à l'issue de l'étape d'analyse 203 le terminal informatique 8 génère lors d'une étape de communication 204 des résultats, un rapport indiquant les différents résultats de l'étape d'analyse, ce rapport comprenant des graphiques, pouvant être utilisés par un utilisateur à des fins de diagnostic du système informatique 101. Avantageusement, le rapport communiqué par le terminal informatique 8 comprend au moins les graphiques suivants :
- les graphiques de flux de données et ressources spécifiés par l'utilisateur lors de l'étape de configuration 200 ;
- la cartographie des flux de données entrants et sortants pour l'ensemble des serveurs 1, 2, 3, 4, 5, 6, 7 informatiques du système informatique 101 ;
- un diagramme de Gantt illustrant l'ordonnancement des flux de données entrants et sortants pour l'ensemble des serveurs 1, 2, 3, 4, 5, 6, 7 informatiques du système informatique 101 ;
- un graphique illustrant l'évolution temporelle du nombre de connexions parallèles (simultanées) ouvertes pour chaque serveur 1, 2, 3, 4, 5, 6, 7 informatique ;
- un graphique illustrant l'évolution temporelle sur un ou plusieurs intervalles prédéfinis du nombre total de connexions pour chaque serveur 1, 2, 3, 4, 5, 6, 7 informatique ;
- un ou plusieurs graphiques illustrant pour chaque anomalie, l'évolution des ressources de chaque serveur 1, 2, 3, 4, 5, 6, 7 informatique durant un ou plusieurs intervalles temporels dans lesquels l'anomalie est identifiée.

Avantageusement, les modes de réalisations précédemment décrits permettent une cartographie de l'ensemble des flux de données existants pour l'ensemble des serveurs 1, 2, 3, 4, 5, 6, 7 informatique du système informatique 101. Alors qu'un utilisateur n'a pas initialement nécessairement connaissance de l'ensemble des flux de données existants, les modes de réalisations proposés permettent, à partir de connaissances mêmes limitées du système informatique 101, d'établir une cartographie précise de l'ensemble des flux de données existants, voire détecter la présence de serveurs non-identifiés au préalable. Ces modes de réalisations permettent, en outre, d'obtenir une analyse précise des ressources se rapportant à chacun des flux de données, et la détection automatisée d'anomalies pouvant survenir au niveau d'un ou plusieurs serveurs 1, 2, 3, 4, 5, 6, 7 informatiques. La réalisation de graphiques corrélés à la fois aux anomalies et aux ressources mesurées permet à l'utilisateur, par ailleurs, d'identifier facilement l'origine de ces anomalies, issues par exemple d'un flux de données d'un serveur source, et de visualiser l'impact de ces anomalies sur l'ensemble des serveurs 1, 2, 3, 4, 5, 6, 7 informatiques du système informatique 101. L'ensemble de ces modes de réalisation facilite donc le diagnostic d'incidents pouvant survenir dans un système informatique 101, aidant par exemple à l'identification de flux de données occasionnant une surconsommation des ressources des serveurs 1, 2, 3, 4, 5, 6, 7 informatiques.

## Revendications

1. Un système de gestion d'une pluralité de serveurs (1, 2, 3, 4, 5, 6, 7) informatiques interconnectés via un réseau (100) de communication, ce système comprenant une pluralité de sondes (11, 21, 31, 41, 51, 61, 71) de sorte que chacune des sondes est, respectivement, associée à un serveur (1, 2, 3, 4, 5, 6, 7) informatique de ladite pluralité de serveurs (1, 2, 3, 4, 5, 6, 7) informatiques et est configurée pour superviser les échanges de données effectuées par ce serveur (1, 2, 3, 4, 5, 6, 7) informatique avec les autres serveurs (1, 2, 3, 4, 5, 6, 7) de ladite pluralité de serveurs (1, 2, 3, 4, 5, 6, 7) via le réseau (100) de communication, et pour mesurer les ressources de ce serveur (1, 2, 3, 4, 5, 6, 7) informatique, ledit système comprenant, en outre, un terminal informatique (8) connecté au réseau (100) de communication, ce terminal informatique (8) étant configuré pour
recevoir un ensemble de données de la part d'un utilisateur, lesdites données comprenant des informations relatives à l'ensemble des flux de données connus par ledit utilisateur ; des informations concernant un ou plusieurs graphiques d'analyse de flux de données, contenant une ou plusieurs ressources à superviser, un ou plusieurs intervalles de temps pour superviser lesdites flux de données, un type d'information à superviser concernant lesdits flux de données ; et des informations de seuils permettant la détection d'anomalies ;
collecter des mesures effectuées par les sondes (11, 21, 31, 41, 51, 61, 71), en fonction dudit ensemble de données, pour effectuer la construction d'une cartographie de l'ensemble des flux de données entre lesdits serveurs, formés par lesdits échanges de données et pour comparer lesdites mesures avec lesdites informations de seuil afin de détecter des anomalies.

2. Le système de la revendication 1, dans lequel une première sonde, dite sonde réseau, est configurée pour superviser les échanges de données et une deuxième sonde, dite sonde de ressources, est configurée pour mesurer les ressources sont associées à un même serveur (1, 2, 3, 4, 5, 6, 7) informatique.

3. Le système de la revendication précédente, dans lequel la sonde réseau est configurée pour détecter, déterminer et analyser les paramètres associés aux flux de données entrant et sortant vers/depuis le serveur (1, 2, 3, 4, 5, 6, 7) informatique.

4. Le système de la revendication précédente, dans lequel les paramètres associés aux flux de données comprennent l'adresse du serveur (1, 2, 3, 4, 5, 6, 7) informatique source ou destinataire du flux de données, le type du flux de données, et le numéro de port de destination.

5. Le système de la revendication 2, dans lequel la sonde de ressources est configurée pour mesurer les paramètres matériels du serveur informatique, ces paramètres matériels comprenant la volumétrie, le temps de traitement de données réceptionnées, le temps de traitement d'une requête, le taux d'occupation des caches de processeurs, les entrées/sorties de disques réseaux, l'utilisation de la mémoire vive, et la bande passante.

6. Une méthode de gestion d'une pluralité de serveurs (1, 2, 3, 4, 5, 6, 7) informatiques interconnectés via un réseau (100) de communication, cette méthode comprenant les étapes suivantes
- association d'une sonde (11, 21, 31, 41, 51, 61, 71) à chacun des serveurs (1, 2, 3, 4, 5, 6, 7) informatiques, cette sonde étant configurée pour superviser les échanges de données effectuées par ce serveur (1, 2, 3, 4, 5, 6, 7) informatique avec les autres serveurs (1, 2, 3, 4, 5, 6, 7) de ladite pluralité de serveurs (1, 2, 3, 4, 5, 6, 7) via le réseau (100) de communication, et pour mesurer les ressources de ce serveur (1, 2, 3, 4, 5, 6, 7) informatique ;
- fourniture (200) d'un ensemble de données de la part d'un utilisateur, lesdites données comprenant des informations relatives à l'ensemble des flux de données connus par ledit utilisateur ; des informations concernant un ou plusieurs graphiques d'analyse de flux de données, contenant une ou plusieurs ressources à superviser, un ou plusieurs intervalles de temps pour superviser lesdites flux de données, un type d'information à superviser concernant lesdits flux de données ; et des informations de seuils permettant la détection d'anomalies ;
- collecte des mesures effectuées par les sondes par un terminal informatique, en fonction dudit ensemble de données ;
- construction d'une cartographie de l'ensemble des flux de données entre lesdits serveurs, formés par lesdits échanges de données, par ledit terminal ; et comparaison desdites mesures avec lesdites informations de seuil afin de détecter des anomalies.

7. La méthode de la revendication 6, comprenant, en outre, une étape de corrélation des mesures collectées.

8. Un supercalculateur (101) comprenant le système de gestion de l'une quelconque des revendications 1 à 5.

## Patentansprüche

1. System zur Verwaltung einer Vielzahl von IT-Servern (1, 2, 3, 4, 5, 6, 7), die über ein Kommunikationsnetz (100) miteinander verbunden sind, wobei dieses System eine Vielzahl von Sonden (11, 21, 31, 41, 51, 61, 71) so umfasst, dass jede der Sonden jeweils mit einem IT-Server (1, 2, 3, 4, 5, 6, 7) aus der Vielzahl von IT-Servern (1, 2, 3, 4, 5, 6, 7) verknüpft ist und dafür ausgebildet ist, die Datenaustausche, die von diesem IT-Server (1, 2, 3, 4, 5, 6, 7) über das Kommunikationsnetz (100) mit den anderen Servern (1, 2, 3, 4, 5, 6, 7) aus der Vielzahl von Servern (1, 2, 3, 4, 5, 6, 7) vorgenommen werden, zu überwachen und die Ressourcen dieses IT-Servers (1, 2, 3, 4, 5, 6, 7) zu messen, wobei das System weiter ein IT-Endgerät (8) umfasst, das mit dem Kommunikationsnetz (100) verbunden ist, wobei dieses IT-Endgerät (8) dafür ausgebildet ist,
einen Datensatz von Seiten eines Benutzers zu empfangen, wobei die Daten Informationen bezüglich der Gesamtheit der Datenströme, die dem Benutzer bekannt sind; Informationen, die eine oder mehrere Grafiken zur Analyse von Datenströmen betreffen, die eine oder mehrere zu überwachende Ressourcen, ein oder mehrere Zeitintervalle, um die Datenströme zu überwachen, einen Typ von Informationen enthalten, der, was die Datenströme betrifft, überwacht werden soll; und Informationen zu Schwellen umfassen, die das Erkennen von Auffälligkeiten ermöglichen;
abhängig von dem Datensatz Maßnahmen, die von den Sonden (11, 21, 31, 41, 51, 61, 71) vorgenommen werden, zu sammeln, um die Erstellung einer Kartierung der Gesamtheit der Datenströme zwischen den Servern, die von den Datenaustauschen gebildet werden, vorzunehmen und die Maßnahmen mit den Schwelleninformationen zu vergleichen, um Auffälligkeiten zu erkennen.

2. System nach Anspruch 1, wobei eine als Netzsonde bezeichnete erste Sonde, die dafür ausgebildet ist, die Datenaustausche zu überwachen, und eine als Ressourcensonde bezeichnete zweite Sonde, die dafür ausgebildet ist, die Ressourcen zu messen, mit ein und demselben IT-Server (1, 2, 3, 4, 5, 6, 7) verknüpft sind.

3. System nach dem vorstehenden Anspruch, wobei die Netzsonde dafür ausgebildet ist, die Parameter, die mit den vom IT-Server (1, 2, 3, 4, 5, 6, 7) eingehenden und zu demselben ausgehenden Datenströmen verknüpft sind, zu erkennen, zu bestimmen und zu analysieren.

4. System nach dem vorstehenden Anspruch, wobei die mit den Datenströmen verknüpften Parameter die Adresse des Quell- oder Ziel-IT-Servers (1, 2, 3, 4, 5, 6, 7) des Datenstroms, den Typ des Datenstroms, und die Nummer des Zielports umfassen.

5. System nach Anspruch 2, wobei die Ressourcensonde dafür ausgebildet ist, die Hardware-Parameter des IT-Servers zu messen, wobei diese Hardware-Parameter das Volumen, die Verarbeitungszeit von empfangenen Daten, die Verarbeitungszeit einer Anforderung, den Belegungsgrad der Prozessoren-Caches, die Ein-/Ausgänge von Netzwerkplatten, die Auslastung des RAM-Speichers und die Bandbreite umfassen.

6. Verfahren zur Verwaltung einer Vielzahl von IT-Servern (1, 2, 3, 4, 5, 6, 7), die über ein Kommunikationsnetz (100) miteinander verbunden sind, wobei dieses Verfahren die folgenden Schritte umfasst
- Verknüpfen einer Sonde (11, 21, 31, 41, 51, 61, 71) mit jedem der IT-Server (1, 2, 3, 4, 5, 6, 7), wobei diese Sonde dafür ausgebildet ist, die Datenaustausche, die von diesem IT-Server (1, 2, 3, 4, 5, 6, 7) über das Kommunikationsnetz (100) mit den anderen Servern (1, 2, 3, 4, 5, 6, 7) aus der Vielzahl von Servern (1, 2, 3, 4, 5, 6, 7) vorgenommen werden, zu überwachen und die Ressourcen dieses IT-Servers (1, 2, 3, 4, 5, 6, 7) zu messen;
- Bereitstellen (200) eines Datensatzes von Seiten eines Benutzer, wobei die Daten Informationen bezüglich der Gesamtheit der Datenströme, die dem Benutzer bekannt sind; Informationen, die eine oder mehrere Grafiken zur Analyse von Datenströmen betreffen, die eine oder mehrere zu überwachende Ressourcen, ein oder mehrere Zeitintervalle, um die Datenströme zu überwachen, einen Typ von Informationen enthalten, der, was die Datenströme betrifft, überwacht werden soll; und Informationen zu Schwellen umfassen, die das Erkennen von Auffälligkeiten ermöglichen;
- Sammeln der von den Sonden vorgenommenen Maßnahmen durch ein IT-Endgerät abhängig von dem Datensatz;
- Erstellen einer Kartierung der Gesamtheit der Datenströme zwischen den Servern, die von den Datenaustauschen gebildet werden, durch das Endgerät; und Vergleichen der Maßnahmen mit den Schwelleninformationen, um Auffälligkeiten zu erkennen.

7. Verfahren nach Anspruch 6, das weiter einen Schritt des Korrelierens der gesammelten Maßnahmen umfasst.

8. Superrechner (101), der das Verwaltungssystem nach einem der Ansprüche 1 bis 5 umfasst.

## Claims

1. A system for managing a plurality of computer servers (1, 2, 3, 4, 5, 6, 7) interconnected by a communication network (100), this system comprising a plurality of probes (11, 21, 31, 41, 51, 61, 71) such that each of the probes is assigned respectively to a computer server (1, 2, 3, 4, 5, 6, 7) of said plurality of computer servers (1, 2, 3, 4, 5, 6, 7) and is configured to supervise the data exchanges performed by this computer server (1, 2, 3, 4, 5, 6, 7) with the other servers (1, 2, 3, 4, 5, 6, 7) of said plurality of servers (1, 2, 3, 4, 5, 6, 7) via the communication network (100), and to measure the resources of this computer server (1, 2, 3, 4, 5, 6, 7), the system further comprising a computer terminal (8) connected to the communication network (100), this computer terminal (8) being configured to
receive a set of data from a user, said data comprising information relating to all the data flows known by said user; information relating to one or more graphs for analysing the data flow, containing one or more resources to supervise, one or more time intervals for supervising said data flow, a type of information to be supervised relating to said data flows; and information on thresholds enabling the detection of anomalies;
collect measures performed by the probes (11, 21, 31, 41, 51, 61, 71), as a function of said data set, to construct a map of all the data flows between said servers, formed by said data exchanges and to compare said measures with said threshold information in order to detect anomalies.

2. The system of claim 1, wherein a first probe, referred to as a network probe, configured to supervise the data exchanges and a second probe, referred to as a resource probe, configured to measure the resources, are assigned to a same computer server (1, 2, 3, 4, 5, 6, 7) .

3. The system of the preceding claim, wherein the network probe is configured to detect, determine and analyse the parameters associated with the data flows entering and leaving the computer server (1, 2, 3, 4, 5, 6, 7).

4. The system of the preceding claim, wherein the parameters associated with the data flow comprise the address of the source or destination computer server (1, 2, 3, 4, 5, 6, 7) of the data flow, the type of the data flow, and the destination port number.

5. The system of claim 2, wherein the resources probe is configured to measure the material parameters of the computer server, these material parameters comprising the volumetry, the received data processing time, the request processing time, the occupancy rate of the processor caches, the inputs/outputs of network discs, the use of RAM and the bandwidth.

6. A method for managing a plurality of computer servers (1, 2, 3, 4, 5, 6, 7) interconnected by a communication network (100), this method comprising the following steps:
- assigning a probe (11, 21, 31, 41, 51, 61, 71) to each of the computer servers (1, 2, 3, 4, 5, 6, 7), this probe being configured to supervise the data exchanges performed by this computer server (1, 2, 3, 4, 5, 6, 7) with the other servers (1, 2, 3, 4, 5, 6, 7) of said plurality of servers (1, 2, 3, 4, 5, 6, 7) via the communication network (100), and to measure the resources of said computer server (1, 2, 3, 4, 5, 6, 7);
- providing (200) a set of data from a user, said data comprising information relating to all the data flows known by said user; information relating to one or more graphs for analysing data flows, containing one or more resources to be supervised, one or more time intervals for supervising said data flows, a type of information to be supervised relating to said data flows; and threshold information enabling the detection of anomalies;
- collecting measures performed by the probes by a computer terminal, as a function of said data set;
- constructing a map of all the data flows between said servers, formed by said data exchanges, by said terminal; and comparing said measures with said threshold information in order to detect anomalies.

7. The method of claim 6, further comprising a step of correlating the collected measures.

8. A supercomputer (101) comprising the management system of any of claims 1 to 5.
